# EUROPEAN PATENT SPECIFICATION

(11) **EP 3 856 657 B1**
(45) Date of publication and mention of the grant of the patent: **07.08.2024**
(21) Application number: 19866346.0
(22) Date of filing: 27.09.2019
(51) Int. Cl.: A47J 27/10, B65D 33/00, B65D 33/25, B65D 75/58, B65D 81/20, G06K 19/06, B65D 81/32, B65D 81/34

(54) **SOUS VIDE POUCH**
SOUS-VIDE-BEUTEL
POCHE SOUS VIDE

(30) Priority: 28.09.2018 US 201862738786 P
(43) Date of publication of application: 04.08.2021
(73) Proprietor: Breville USA, Inc., Torrance, California 90501 (US)
(72) Inventor: YOUNG, Christopher Charles, Torrance, California 98115 (US); SHAW, Charles M., Torrance, California 90501 (US)
(74) Representative: Zimmermann, Tankred Klaus
(86) International application number: PCT/IB2019/058210
(87) International publication number: WO 2020/065598

(56) References cited:
- WO-A1-2014/019018
- WO-A1-2014/134717
- WO-A1-2017/089911
- WO-A2-2004/108404
- WO-A2-2008/092151
- FR-A1- 2 930 528
- US-A- 4 414 717
- US-A1- 2008 240 628
- US-A1- 2010 272 868
- US-A1- 2015 118 362
- US-A1- 2016 145 030
- US-B2- 7 101 079

## Description

### TECHNICAL FIELD

The present invention relates to a sous vide pouch.

### BACKGROUND

Sous vide is a method of cooking in which food is placed in a plastic pouch, glass jar, or other sealed container and cooked in a water bath or steam environment for longer than normal cooking times (e.g., 1-7 hours or more) at an accurately regulated temperature. The temperature can be much lower than normally used for cooking, typically around 55-75 °C (131-167 °F) for meat and somewhat higher for vegetables, typically around 82-95 °C (180-203 °F). The intent is to cook the item evenly, with little risk of under- or over-cooking, while achieving textural, nutritional, and flavor benefits. Sometimes sauces or other ingredient preparations can be placed in the sealed container with the food to be cooked. WO 2014/134717 A1 discloses an automated immersion apparatus is designed to automatically cook, upon request a meal having various ingredients by immersing bagged food in temperature controlled liquid. The cooking time may be manually or automatically programmed from downloaded cooking direction associated with the food. The cooking request may be given by a user from the physical apparatus or using a mobile device application.

A problem faced with sous vide cooking is that multiple food products placed in a sous vide pouch may overlap and/or contact each other during the sous vide cooking process. This can decrease the surface area of the food products which are exposed during the sous vide cooking process which can decrease the effectiveness and predictability of the sous vide cooking process.

Another problem faced is the preparation time and the difficulty with preparing a sauce which is to be contained in the sous vide pouch. The sauce needs to be prepared in a manner to accommodate liquid that may exude from the food product(s) during the sous vide cooking process. Once the sauce has been prepared, the sauce needs to be poured into the plastic sous vide pouch which can be difficult due to the flexible nature of the pouch, thereby resulting in some spillage. As the sauce may have been prepared to accommodate liquid which exudes from the food product, the reduced amount of sauce which is poured into the sous vide pouch may result in an undesired food product and sauce after the sous vide cooking process.

### SUMMARY

It is an object of the present invention to at least substantially address one or more of the above disadvantages, or at least provide a useful alternative to the above discussed arrangements and/or methods.

In a first aspect there is provided a sous vide pouch according to claim 1, comprising:a plastic material having a sealed portion extending at least partially around a perimeter of the plastic material and defining a chamber; and a partition extending within at least a portion of the chamber forming a boundary between a first portion and a second portion of the chamber, wherein the first and second portions are each configured to receive a food product therein.

In certain embodiments, the sous vide pouch comprises a tearable portion and a resealable opening of the chamber, wherein the resealable opening of the chamber is accessible by tearing of the tearable portion.

In certain embodiments, the chamber contains a sauce prior to the tearing of the tearable portion.

In certain embodiments, the sauce includes at least one of: a liquid; and a gel.

In certain embodiments, the partition is: a weld between opposing wall portions of the chamber; or a seal between the opposing wall portions of the chamber.

In certain embodiments, the seal is an adhesive seal.

In certain embodiments, the partition is frangible to remove the boundary between the first and second portions.

According to the invention the sous vide pouch comprises a valve to facilitate removal of air from the chamber.

According to the invention the valve is a one-way valve.

In certain embodiments, at least some of the plastic material of the chamber is textured to create channels for the air to flow therethrough toward the valve during removal of the air.

In certain embodiments, the at least some of the plastic material of the chamber that is textured comprises: an embossed texture; a waffled texture; or a castellated texture.

In certain embodiments, the valve includes a membrane configured to permit the air within the chamber to pass therethrough and inhibit non-gaseous contents within the chamber exiting via the valve.

According to the invention the sous vide pouch includes a dam formation configured to inhibit the non-gaseous contents exiting the chamber via the valve during removal of the air.

In certain embodiments, the sous vide pouch comprises a removable lid for sealing the valve.

In certain embodiments, the sous vide pouch comprises a machine-readable code is printed or applied to an exterior surface of the sous vide pouch, wherein the machine-readable code is indicative of at least one of: a type of contents within the chamber; a batch number of the contents within the chamber; a manufacture date of the contents within the chamber; and a best-by date of the contents within the chamber.

### BRIEF DESCRIPTION OF THE DRAWINGS

Preferred embodiments of the present invention will now be described, by way of examples only, with reference to the accompanying drawings:
Figure 1 is a front view of an example of a sous vide pouch in accordance with an embodiment of the present technology.
Figure 2 is a front view of a further example of a sous vide pouch in accordance with another embodiment of the present technology.
Figure 3A is a perspective view of an example removable clip
Figure 3B is a front view of an example of a sous vide pouch assembly including the sous vide pouch shown in Figure 2 with the clip shown in Figure 3A coupled thereto.
Figure 3C is a front view of an example of a sous vide pouch in accordance with another embodiment of the present technology.
Figure 4 is a top view of an example of packaging for receiving and securing a sous vide pouch

### DETAILED DESCRIPTION

Aspects of the present disclosure are directed generally toward a sous vide pouch. In some of the implementations described below, the sous vide pouch can hold or contain a pre-made sauce.

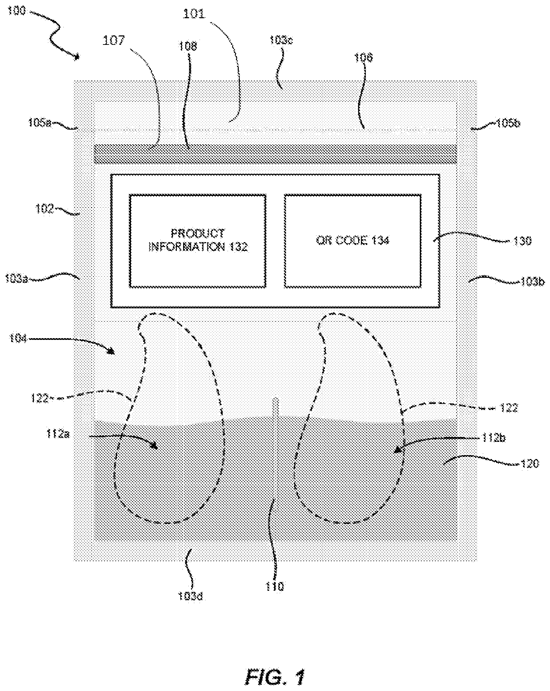

Figure 1 is a front view of a sous vide bag or pouch 100 ("pouch 100") in accordance with an embodiment of the present technology. In the illustrated embodiment, the pouch 100 includes an exterior weld or seal 102 defining an interior chamber 104. More specifically, the seal 102 includes a first side portion 103a, a second side portion 103b, a top portion 103c, and a bottom portion 103d. In some embodiments, the bottom portion 103d of the seal 102 can have a pillow construction, gusset, etc., such that the bottom portion 103d can be formed to, for example, allow the pouch 100 to be positioned on a surface in an upright, free-standing position. In the illustrated embodiment, the pouch 100 has a generally rectangular shape while, in other embodiments, the pouch 100 can have other shapes (e.g., circular, rectilinear, oval, polygonal, triangular, etc.).

The pouch 100 and the seal 102 can be formed from any material suitable for use at elevated temperatures for prolonged periods of time during a sous vide cooking process. For example, the pouch 100 can be formed from a polymer or laminated polymer film (e.g., oriented and bi-axially oriented films) including polypropylene (PP), cast PP, polyethylene (PE), low-density PE (LDPE), and/or linear LDPE (LLDPE). Additionally, the pouch 100 can include nylon films (e.g., for puncture resistance), retort grade films, non-retort grade films, foil laminates, non-foil laminates, etc. The material used to form the pouch 100 can further be selected to have high oxygen barrier properties (e.g., low transmission rates), high carbon dioxide barrier properties (e.g., low transmission rates), high moisture barrier properties (e.g., low transmission rates), to be tolerant to the pH of food within a selected range (e.g.,2-4 pH), etc. The seal 102 can be formed using a suitable heat-sealing, ultrasonic, and/or UV-curing process and can include a suitable adhesive, such as a low-migration lamination adhesive for use at elevated temperatures. In some embodiments, the pouch 100 and/or the seal 102 can include one or more perforations extending through one or more layers (e.g., laminate polymer layers) such that the pouch 100 has a desired permeability to specific gases, vapors, etc. In some embodiments, the pouch 100 can be recyclable and/or compostable. For example, the pouch 100 can be formed from polymers originating from bio-fermentation or crude-oil fractionation, or from recycled materials.

The first side portion 103a of the seal 102 can include a first notch (e.g., slit, groove, etc.) 105a extending at least partially therethrough, and the second side portion 103b can include a second notch 105b extending at least partially therethrough. The sous vide pouch includes a tearable portion 101. The pouch includes a resealable opening 107 of the chamber 104 which is accessible by tearing of the tearable portion 101. The pouch 100 includes a tear line (e.g., a laser perforation, a hot-needle perforation, etc.) 106 defining the tearable portion 101, wherein the tear line 106 extends between the notches 105 and a sealing member 108 of a resealable opening 107 configured to be operated by a user for sealing/unsealing the chamber 104 after the top portion 103c of the seal 102 is removed. The sealing member 108 of the resealable opening 107 of the chamber 104 can be a single-press zip seal, a multiple-press zip seal, or other sealing member known in the art. During use of the pouch 100, a user can grip the pouch 100 (e.g., proximate to at least one of the notches 105) and tear the pouch 100 along the tear line 106 to thereby remove the top portion 103c of the seal 102. The user can then unseal the sealing member 108 of the resealable opening 107 to enable access to the chamber 104. In the illustrated embodiment, a sauce 120 (e.g., a sauce for flavoring a food product during a sous vide cooking process) is disposed within the chamber 104. After removing the top portion 103c of the seal 102 and opening the sealing member 108, the user can position one or more food products 122 (shown schematically) within the chamber 104 and at least partially in the sauce 120. The food products 122 can be proteins (e.g., chicken, eggs, steak, fish, etc.), vegetables, or other food products suitable for sous vide cooking. The user can remove at least some air from the chamber 104 by, for example, squeezing the pouch 100 with the sealing member 108 partially open and subsequently closing the sealing member 108. In some embodiments, the pouch 100 can have a relatively small thickness (e.g., about 3 mm or less) such that the pouch 100 is flexible-which can provide for optimal (e.g., even and consistent) cooking.

In the illustrated embodiment, the pouch 100 further includes a partition 110 extending within at least a portion of the chamber 104 forming a boundary between a first portion 112a and a second portion 112b of the chamber 104, wherein the first and second portions 112a, b are each configured to receive a food product 122 therein. The partition extends generally parallel to the first and second side portions 103a, b thereby dividing or separating the chamber 104 into the first portion 112a and the second portion 112b. In some embodiments, the partition 110 can be positioned generally centrally with respect to the first and second side portions 103a, b while, in other embodiments, the partition 110 can be positioned closer to the one of the first and second side portions 103a, b such that the portions 112 of the chamber 104 have dissimilar dimensions (e.g., volumes). The partition 110 can be a weld or seal between opposing wall portions of the chamber 104 and, in one example, can have a length of about 70 mm and a width of about 2 mm. In some embodiments, the partition 110 can be an adhesive seal formed from a food safe adhesive that is peelable and/or re-sealable, and/or that can be activated by heat and pressure applied to the sealing surface. As shown, the partition 110 does not extend to the bottom portion 103d of the seal 102 to permit the sauce 120 to equalize between the first and second portions 112a, b of the chamber 104.

The partition 110 can be frangible such that the user can break or tear the partition 110 to remove the boundary between the first and second portions 112 a, b and join the portions 112 of the chamber 104. As shown, during use of the pouch 100, one of the food products 122 can be positioned within the first portion 112a of the chamber 104, and one of the food products 122 can be positioned within the second portion 112b of the chamber 104. The partition 110 can inhibit or prevent the food products 122 (e.g., two proteins) from overlapping and/or contacting each other during a sous vide cooking process. This can increase the surface area of the food products 122 exposed during the sous vide cooking process, and is expected to increase the effectiveness and predictability of the sous vide cooking process. In embodiments where the partition 110 is frangible, re-sealable, etc., the user can break or unseal the partition 110 to provide space within the chamber 104 for cooking a single, large food product 122 (e.g., a large steak). In some embodiments, the chamber 104 can include additional portions (e.g., chambers) separated by seals that are frangible, re-sealable, etc., to permit components (e.g., ingredients) to be initially separated and then selectively added to the chamber including the food products 122 during a sous vide cooking process.

A sticker 130 can be affixed to the pouch 100 and can include printed information such as product information 132 and machine readable code such as a QR code 134 or other unique identifier. The product information 132 can include, for example, a type (i.e. name and description) of the sauce 120, refrigeration instructions, cooking instructions, the lot/batch number of the sauce, the manufacture date of the sauce, the best-by date of the sauce, etc. As described in greater detail below, the QR code 134 can be scannable by a user device (e.g., an application running on a mobile phone or tablet). After scanning the QR code 134, the user device can receive, for example, cooking instructions, information about the sauce 120, information about particular food products to pair with the sauce 120, expiration or best-by date information, recall information, etc. Alternatively, the sticker 130 can be omitted and the product information 132 and/or QR code 134 can be printed directly on the pouch 100 using for example, a low migration ink intended for use at elevated temperatures. Further, the pouch 100 can include an RFID tag or similar passive or active data storage device instead of or in addition to the QR code 134.

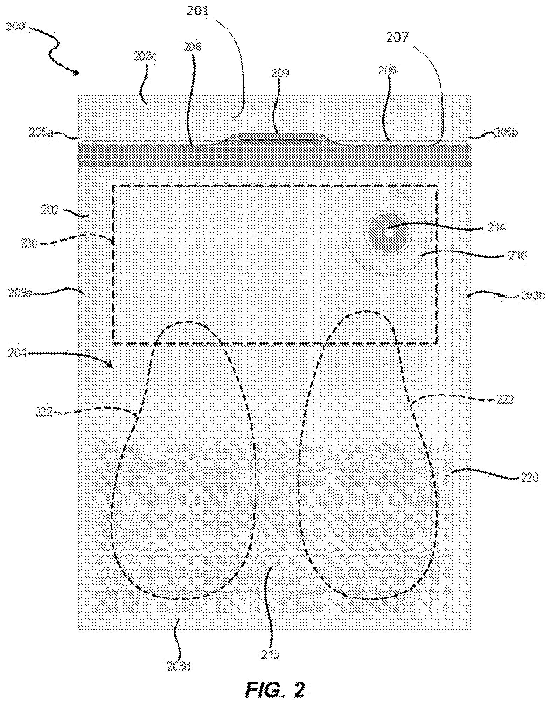

Figure 2 is a front view of a sous vide bag or pouch 200 ("pouch 200") in accordance with another embodiment of the present technology. Features of the sous vide pouch 200 that are identical or substantially similar to those of the sous vide pouch 100 are provided with a reference number increased by 100. It will be appreciated that the above description of these features in relation to the sous vide pouch 100 are also applicable to the corresponding identical features found in the sous vide pouch 200.

The pouch 200 includes several features generally similar to the features of the pouch 100 described in detail above with reference to Figure 1. For example, the pouch 200 includes an exterior weld or seal 202 having a first side portion 203a, a second side portion 203b, a top portion 203c, and a bottom portion 203d, and defining an interior chamber 204. Likewise, the pouch 200 includes (i) a tearable portion 201 defined by a tear line 206 extending between a first notch 205a and a second notch 205b, (ii) a sealing member 208 configured to be operated by a user for sealing/unsealing a resealable opening 207 of the chamber 204 when the top portion 203c of the seal 202 is removed, and (iii) a partition 210 dividing the chamber 204 and configured to separate multiple food products 222 disposed within the chamber 204. In the illustrated embodiment, the sealing member 208 is a double-press zip seal having a tab 209 that provides mechanical leverage for easy opening (e.g., unsealing) of the sealing member 208.

The pouch 200 further includes a valve 214 (e.g., a vacuum valve) configured to facilitate the removal of air from the chamber 204 of the pouch 200. The valve 214 can be a one-way such as a check-valve that that allows air to leave the chamber 204 but not to reenter. To remove air from the chamber 204, the user can simply squeeze and/or press the pouch 200 while the sealing member 208 is closed. An external pressure source (e.g., vacuum source, pump, etc.) can be coupled over the valve 214 and used to remove the air from the chamber 204. At least some of the plastic material of the chamber 104 can be textured to create channels for the air to flow therethrough toward the valve 214 during removal of the air. The pouch 200 can be made of an embossed, waffled, castellated, or other textured plastic material that creates channels for air to be easily removed from the pouch 200. Compared to the pouch 100 described in detail above with reference to Figure 1, the valve 214 can enable the food products 222 to be positioned within the chamber 204 and at least partially in a sauce 220 with fewer surrounding air pockets. This can increase the surface area of the food products 222 exposed during the sous vide cooking process, and is expected to increase the effectiveness and predictability of the sous vide cooking process.

The valve 214 can include a membrane that permits air to pass from the chamber 204 through the membrane and from the valve 214, but that inhibits non-gaseous contents such as the sauce 220 from exiting the valve 214. For example, the membrane can be made from a water-resistant, or water-proof membrane that allows vapor transmission, such as structured polytetrafluoroethylene (PTFE). Alternatively, a cellulosic material may be used that resists the migration of liquid in the chamber 204, while allowing the flow of vapor. In the illustrated embodiment, the pouch 200 further includes a dam formation 216 configured to inhibit non-gaseous contents such as the sauce 220 and/or other ingredients from exiting through the valve 214 during removal of air via the valve 214. For example, the dam formation 216 can be a seal or weld having a curved shape that at least partially surrounds the valve 214 to block or redirect the sauce 220 from entering the valve 214. That is, the dam formation 216 can be shaped and positioned to increase the distance the sauce 220 must travel to reach the valve 214 while air is being removed from the chamber 204. A lid, such as a heat-sealed lid, can be positioned over the valve 214 to preserve the sauce 220 prior to removal of the top portion 203c of the seal 202 and placement of the food products 222 in the chamber 204. The lid can be formed from a non-permeable material such as a foil or laminate material that does not degrade (e.g., aluminum oxide, ethylene vinylalcohol (EVOH), aluminum foil, etc.). In some embodiments the lid can be adhered to the pouch 200 over the valve 214 during manufacturing and storage to preserve the sterility of the sauce 220 in the pouch 200, and can be removed (e.g., peeled away from the pouch 200) before use.

A sticker 230 (shown schematically in Figure 2 to avoid obscuring the valve 214) including a QR code and/or product information can be attached to the pouch 200 and removed prior to placement of the food products 222 in the chamber 204 and/or use of the valve 214. Accordingly, the sticker 230 can be positioned over the valve 214 prior to use. Alternatively, the sticker 230 can be attached to another portion of the pouch 200 (e.g., an opposing side) or the information (e.g., a QR code) can be printed directly on the pouch 200.

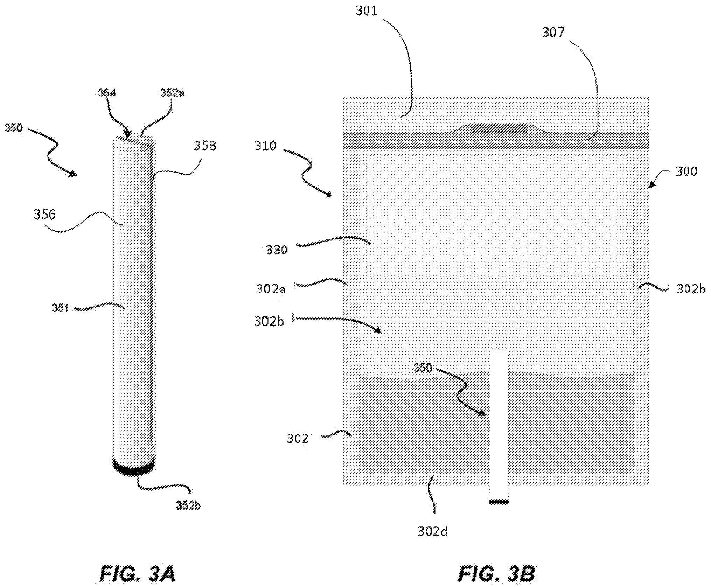

Figure 3A is a perspective view of an external partition or clip 350 ("clip 350"). Figure 3B is a front view of a further example of a pouch 300 shown in Figure 2 with the clip 350 coupled thereto instead of the partition 200 thereby forming a sous vide assembly 310. Features of the sous vide pouch 300 that are identical or substantially similar to those of the sous vide pouch 200 are provided with a reference number increased by 100. It will be appreciated that the above description of these features in relation to the sous vide pouch 200 are also applicable to the corresponding identical features found in the sous vide pouch 300.

Referring to Figure 3A, the clip 350 includes a body 351 having a pair of fingers 356, 358 configured to clampingly engage about at least a portion of the plastic material forming the boundary between a first portion 312a and a second portion 312b of the chamber 104, wherein the first and second portions 312a, b are each configured to receive a food product 322 therein. The body of the clip includes a first end portion 352a and a second end portion 352b, and an aperture or slot 354 extending at least partially through the body 351 from the first end portion 352a toward the second end portion 352b. The body 351 can be formed of a material such as plastic or metal. The pair of fingers 356, 358 can be resiliently biased into clamping engagement about at least a portion of the sous vide pouch 200. The resiliency of the arms 356, 358 provide a spring force that urges the fingers 356, 358 of the clip 350 to be biased toward each other and toward the slot 354. While shown with a slot having a generally uniform width over its length, the clip 350 can be formed so that the slot 354 is closed at the first end portion 352a.The second end portion 352b can be formed of or contain a magnetic material.

Referring to Figure 3B, the pouch 300 is configured similarly to the pouch 100 of Figure 1 or the pouch 200 of Figure 2, except there is no partition 110, 210 extending across at least a portion of the pouch 300. The pouch 300 includes several features generally similar to the features of the pouch 100 and pouch 200 described in detail above with reference to Figures 1 and 2. For example, the pouch 300 includes an exterior weld or seal 302 having a first side portion 303a, a second side portion 303b, a top portion 303c, and a bottom portion 303d, and defining an interior chamber 304. Likewise, the pouch 300 includes tearable portion 301 including a tear line 306 extending between a first notch 305a and a second notch 305b, a sealing member 308 of a resealable opening 307 configured to be operated by a user for sealing/unsealing the chamber 304 when the top portion 303c of the seal 302 is removed. In the illustrated embodiment, the sealing member 308 is a double-press zip seal having a tab 309 that provides mechanical leverage for easy opening (e.g., unsealing) of the sealing member 308. The pouch 300 further includes a valve 314 (e.g., a vacuum valve - shown in broken line) such as a one-way value configured to facilitate the removal of air from the chamber 304 of the pouch 300. At least some of the plastic material of the chamber 304 may textured to create channels for the air to flow therethrough toward the valve 314 during removal of the air. The texture can include an embossed texture, a waffled texture, or a castellated texture. The valve 314 can include a membrane configured to permit the air within the chamber to pass therethrough and inhibit non-gaseous contents within the chamber exiting via the valve. The sous vide pouch 300 can include a dam formation 316 configured to inhibit the non-gaseous contents exiting the chamber via the valve 314 during removal of the air. The sous vide pouch 300 can include a removable lid for sealing the valve 314.

Referring to Figures 3A and 3B together, at least a portion of the pouch 300 (e.g., the bottom portion 303d of the seal 302) can be inserted into the slot 354 of the clip 350 such that the clip 350 forms a boundary between the first portion 312a and the second portion 312b of the chamber 304, wherein the first and second portions 312 are each configured to receive a food product 322 therein. The clip coupling of the clip about the sous vide pouch 300 separates or divides the chamber 304 of the pouch 300 in a generally analogous manner to the partition 110, 210 of pouch 100, 200 respectively. Moreover, the clip 350 can easily be moved laterally relative to the pouch 200 (e.g., toward the first side portion 203a or toward the second side portion 203b of the seal 202) to divide the chamber 204 into two partitions of different sizes.

When the pouch 300 and the clip 350 are inserted into a cooking vessel such as a pot for sous vide cooking, the magnetic second end portion 352b can removably secure the clip 350 to a base of the pot such that the clip 350 maintains the pouch 300 in a generally vertical and submerged position. More than one clip 350 can be used to partition the chamber 304. Alternatively, the clip 350 can be used to maintain the position of the pouch 300 within a cooking instrument (e.g., a pot) without partitioning the chamber 304. For example, one of the first or second side portions 303a, b of the seal 302 can be positioned within the slot 354 of the clip 350 and/or the slot 354 can be formed to be relatively short compared to the chamber 304 (e.g., can receive only the bottom portion 203d of the seal 302). While shown as having only the second end portion 352b formed of or containing a magnetic material, the clip 350 could alternatively be composed entirely or substantially of magnetic material.

The sous vide assembly 310 described in relation to Figure 3B, the clip 350 can be used in conjunction with the pouch 100 (Figure 1) or the pouch 200 (Figure 2). In one form, the clip 350 may be placed into clamping engagement spaced from the partition 110, 210 thereby defining a further third portion of the chamber 104, 204 located between the clip 350 and the partition 110, 210. For example, the clip 350 could be placed between the partition 110, 112 and the second side portion 103b, 203b, thereby effectively sub-dividing the second portion 112b, 212b into two further portions. These further two portions could then receive further food products. It will be appreciated that multiple clips 350 could be placed in clamping engagement about portions of the sous vide pouch 100, 200 to form more boundaries between portions of the chamber 104, 204.

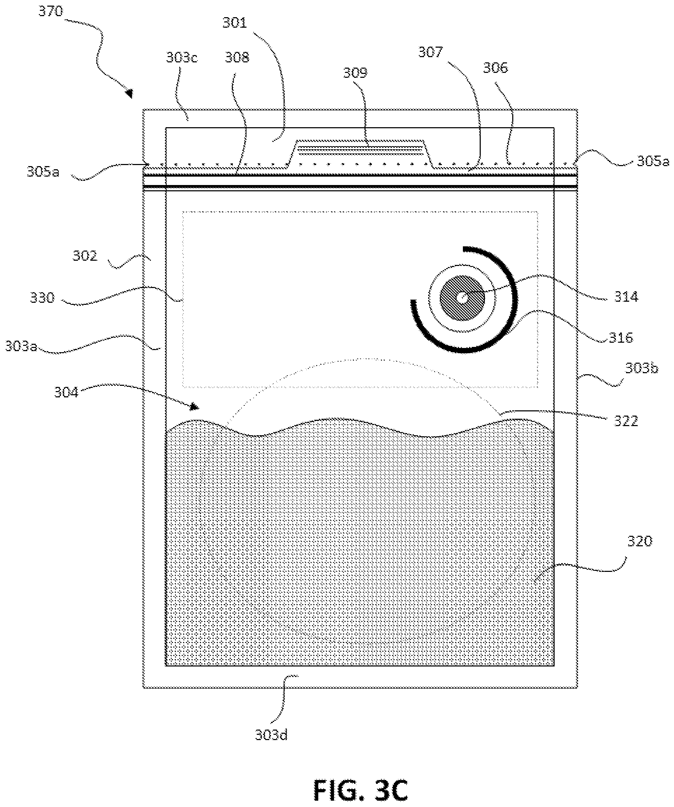

A sous vide pouch 370 can be provided which is a modification of sous vide pouch 200 which does not include the partition 210 as shown in Figure 3C. Features of the sous vide pouch 370 that are identical or substantially similar to those of the sous vide pouch 300 are provided with the same reference number. It will be appreciated that the above description of these features in relation to the sous vide pouch 300 are also applicable to the corresponding identical features found in the sous vide pouch 370.

The sous vide pouch 370 includes the plastic material defining the chamber 304, a tearable portion 301 inhibiting access to the resealable opening 307 and the valve 314 as described in earlier embodiments. The sauce 320 is contained within the chamber 304 prior to tearing the tearable portion 301. The chamber 304 is configured to receive a food product 322 therein prior to sealing of the resealable opening 307 and removal of the at least some air from within the chamber 304.

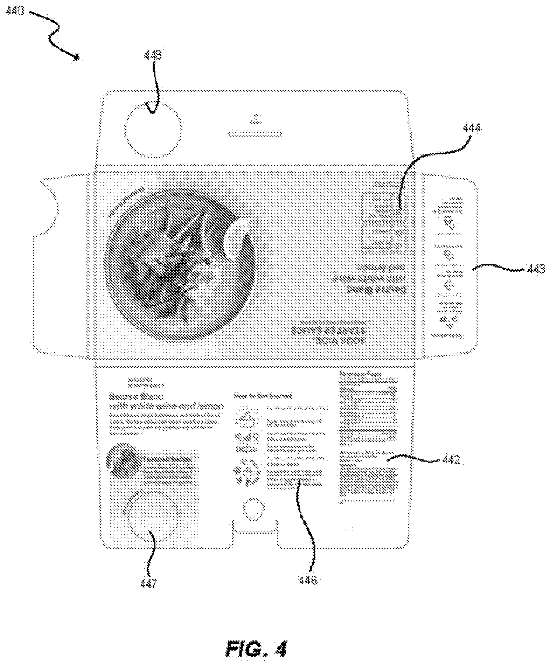

Figure 4 is a top view of one example of packaging 440 for receiving and securing a pouch (e.g., the pouch 100 of Figure 1, the pouch 200 of Figure 2, the pouch 300 of Figure 3B or the pouch 370 of Figure 3C). The packaging 440 is shown laid flat in Figure 4 for the sake of clarity, but is configured to be folded or assembled into a box-like shape for receiving and securing the pouch therein. In general, the packaging 440 can include printed information such as nutrition information 442, cooking instructions 443, flavor and serving size information 444, instructions 446 for using or handling the sous vide pouch, etc. The packaging 440 further can include a QR code 447 linked to a featured recipe. (Of course, the packaging 440 can include different types of information, instructions, directions, etc.) As illustrated, the packaging 440 includes an aperture or hole 448 configured to be aligned with a QR code affixed to or printed on the pouch when the pouch is positioned within the packaging 440. For example, when the pouch 100 (Figure 1) is positioned within the packaging 440, the hole 448 is positioned to be aligned with the QR code 134 of the sticker 130 such that the QR code 134 is scannable by a user device. The packaging 440 reduces the complexity of tracking sous vide pouches since a corresponding (e.g., linked) QR code does not need to be printed on the packaging 440.

As described above, a sous vide pouch can have a sauce pre-positioned or pre-deposited within a sealed chamber of the pouch. In some embodiments, to cook a food product in the pouch and the sauce, a user need only unseal the chamber (e.g., by tearing away a portion of the pouch), deposit the product in the chamber, remove air from the chamber (e.g., by squeezing, displacement, or using a vacuum pump), and reseal the chamber (e.g., by pressing together a zip-seal member). Often, during cooking of the food product, fluid cooks out of the food product and makes it difficult to maintain a desired consistency for the sauce. In particular, the amount of fluid can vary depending on a user chosen consistency or doneness for the food product-for example, more fluid can be released upon cooking the food product for longer. Consequently, the sauce can be specifically designed to maintain a desired consistency over a wide range of cooking temperatures and cooking conditions. That is, the sauce can have a consistency that is generally independent of-or has reduced dependence on-temperature and dilution.

To account for dilution and temperature-induced loss of viscosity of the sauce (e.g., as fluid is cooked out of or exuded from the food product), the concentration of thickeners, solids, etc., can be increased during the preparation of the sauce. This can include additional reduction steps or the use of reductions, pastes, concentrates, dried/powdered or other low-moisture ingredients, as well as higher solids contents ingredients so that-after dilution induced by cooking-the sauce has a desired consistency. Additionally, the sauce can comprise a solid gel such that the dilution with exuded cooking liquid softens the gel or crosses the sol-gel concentration in reverse (a gel-sol transition).

For example, the sauce can at least partially comprise a non-Newtonian structured liquid, such as a thixotropic thickener or a fluid gel system. More particularly, the sauce can include many small particles of gel that are specifically designed to resist melting and to absorb many times their weight in liquid while remaining solid. Therefore, as fluid is released during cooking of the food product, the gel particles can absorb or soak up the fluid to maintain the consistency of the sauce. For example, where a sauce is primarily oil or oilbased, fluid released during cooking will generally remain separate from the oil and change-often undesirably-the consistency of the sauce. However, by including gel particles in the sauce, the gel particles can absorb the released fluid to maintain the consistency of the oil sauce and provide a more aesthetic appearance (e.g. with the released fluid binding to the gel particles to then resemble spice particles).

The sauce can at least partially comprise a lower critical solution temperature (LCST) component such as methyl cellulose (e.g., Methocel). The LCST component is configured to become more viscous as the temperature increases to counteract or counterbalance any loss of viscosity in the sauce as a result of increasing temperatures.

The sauce can at least partially comprise one or more components that change in response to the liquid cooked out of (e.g., exuded from) the food product. These components can be selected to induce viscosity increases that counteract the viscosity reduction caused by dilution. For example, selected components can cause ion-induced gelation (e.g., alginic acid in the sauce with divalent metals in the exuded liquid), coacervation (e.g., negatively charged gum acacia in the sauce with positively charged gelatin in the exuded liquid), and/or pH-triggered effects. As a particular example of pH-triggered effects, a sauce can be produced at a pH that is too low for efficient operation of chosen thickeners in the sauce. Liquid cooked from the food product is generally at a modest pH, and can therefore raise the pH of the liquid exuded from the food product into a range where the thickeners operate efficiently.

In many cases, an additional important aspect of sauce quality after cooking is the ability of the sauce to cling to the cooked food product and limit spreading. Even a sauce with high viscosity will-over time, under the force of gravity-spread to a thin layer and result in an unappealing product on the plate. Furthermore, emulsified sauces can become unstable upon dilution or heating. Thus, an important quality, regardless of desired viscosity, is the yield stress of the fluid. The sauce can include thickeners that increase the yield stress of the sauce. Such thickeners can include, for example, thickeners that exhibit a yield stress alone (e.g., xanthan gum), in synergistic combination with other ingredients or components (e.g., locust bean gum and xanthan gum), or by forming a solid gel (e.g., carrageenan with divalent ions) that prevents coalescence by trapping droplets. Emulsions with sufficient dispersed phase content to produce a yield stress (e.g., mayonnaise) can comprise or be included in the sauce.

Additionally, a commonly encountered situation in sous vide cooking is the presence of coagulated albumin proteins on the surface of a meat food product after cooking. These are often globular proteins leeched from the meat food product that coagulate into visible, undesirable masses on the cooked meat food product. The sauce can include components known to have a stabilizing effect on proteins. For example, by incorporating appropriately selected stabilizing compounds (e.g., protein-complexing polymers), the appearance of undesirable masses on the cooked meat food product can be reduced or even eliminated. Such components could also be employed to prevent undesired coagulation of protein components of the sauce (e.g., dairy) during manufacture, heat processing, or cooking.

## Claims

1. A sous vide pouch (200, 300), comprising:
a plastic material having a sealed portion (202, 302) extending at least partially around a perimeter of the plastic material and defining a chamber (204, 304);
a partition (210) extending within at least a portion of the chamber forming a boundary between a first portion (212a, 312a) and a second portion (212b, 312b) of the chamber; wherein the first and second portions are each configured to receive a food product therein;
**characterized in that**
a one-way valve (214, 314) to facilitate removal of air from the chamber; and
a dam formation (216, 316) configured to inhibit the non-gaseous contents exiting the chamber via the valve during removal of the air.

2. The sous vide pouch (200, 300) according to claim 1, comprising a tearable portion (201, 301) and a resealable opening (207, 307) of the chamber (204, 304), wherein the resealable opening of the chamber is accessible by tearing of the tearable portion.

3. The sous vide pouch (200, 300) according to claim 2, wherein the chamber contains a sauce prior to the tearing of the tearable portion (201, 301).

4. The sous vide pouch (200, 300) according to any one of claims 1 to 3, wherein the partition (210) is: a weld between opposing wall portions of the chamber; or
a seal between the opposing wall portions of the chamber.

5. The sous vide pouch (200, 300) according to any one of claims 1 to 4, wherein the partition (210) is frangible to remove the boundary between the first and second portions (212a, 212b, 312a, 312b).

6. The sous vide pouch (200, 300) according to claim 1, wherein at least some of the plastic material of the chamber (204, 304) is textured to create channels for the air to flow therethrough toward the valve (214, 314) during removal of the air.

7. The sous vide pouch (200, 300) according to claim 6, wherein the at least some of the plastic material of the chamber that is textured comprises:
an embossed texture;
a waffled texture; or
a castellated texture.

8. The sous vide pouch (200, 300) according to any one of claims 1 to 7, wherein the valve (214, 314) includes a membrane configured to permit the air within the chamber (204, 304) to pass therethrough and inhibit non-gaseous contents within the chamber exiting via the valve.

9. The sous vide pouch (200, 300) according to any one of claims 1 to 8, comprising a removable lid for sealing the valve (214, 314).

10. The sous vide pouch (200, 300) according to any one of claims 1 to 9 wherein a machine-readable code is printed or applied to an exterior surface of the sous vide pouch, wherein the machine-readable code is indicative of at least one of:
a type of contents within the chamber;
a batch number of the contents within the chamber;
a manufacture date of the contents within the chamber; and
a best-by date of the contents within the chamber.

## Patentansprüche

1. Ein Sous-Vide-Beutel (200, 300), der folgende Merkmale aufweist:
ein Plastikmaterial mit einem abgedichteten Abschnitt (202, 302), der sich zumindest teilweise um einen Umfang des Plastikmaterials erstreckt und eine Kammer (204, 304) definiert;
eine Unterteilung (210), die sich innerhalb zumindest eines Abschnitts der Kammer erstreckt, wobei dieselbe eine Grenze zwischen einem ersten Abschnitt (212a, 312a) und einem zweiten Abschnitt (212b, 312b) der Kammer bildet; wobei der erste und der zweite Abschnitt jeweils dazu konfiguriert sind, ein Lebensmittelprodukt darin aufzunehmen;
**dadurch gekennzeichnet, dass**
ein Einwegventil (214, 314) dazu dient, eine Entfernung von Luft aus der Kammer zu ermöglichen; und
eine Dammformation (216, 316) dazu konfiguriert ist, zu verhindern, dass die nichtgasförmigen Inhalte die Kammer über das Ventil während der Entfernung der Luft verlassen.

2. Der Sous-Vide-Beutel (200, 300) gemäß Anspruch 1, der einen zerreißbaren Abschnitt (201, 301) und eine wiederverschließbare Öffnung (207, 307) der Kammer (204, 304) aufweist, wobei die wiederverschließbare Öffnung der Kammer durch Zerreißen des zerreißbaren Abschnittes zugänglich ist.

3. Der Sous-Vide-Beutel (200, 300) gemäß Anspruch 2, wobei die Kammer vor dem Zerreißen des zerreißbaren Abschnittes (201, 301) eine Sauce enthält.

4. Der Sous-Vide-Beutel (200, 300) gemäß einem der Ansprüche 1 bis 3, wobei die Unterteilung (210) eine Schweißung zwischen gegenüberliegenden Wandabschnitten der Kammer ist; oder
eine Dichtung zwischen den gegenüberliegenden Wandabschnitten der Kammer ist.

5. Der Sous-Vide-Beutel (200, 300) gemäß einem der Ansprüche 1 bis 4, wobei die Unterteilung (210) zerbrechlich ist, um die Grenze zwischen dem ersten und dem zweiten Abschnitt (212a, 212b, 312a, 312b) zu entfernen.

6. Der Sous-Vide-Beutel (200, 300) gemäß Anspruch 1, wobei zumindest ein Teil des Plastikmaterials der Kammer (204, 304) texturiert ist, um Kanäle zu erzeugen, damit die Luft während der Entfernung der Luft dort hindurch hin zu dem Ventil (214, 314) strömen kann.

7. Der Sous-Vide-Beutel (200, 300) gemäß Anspruch 6, wobei zumindest ein Teil des Plastikmaterials der Kammer, der texturiert ist, Folgendes aufweist:
eine geprägte Textur;
eine wellenartige Textur; oder
eine gezinnte Textur.

8. Der Sous-Vide-Beutel (200, 300) gemäß einem der Ansprüche 1 bis 7, wobei das Ventil (214, 314) eine Membran umfasst, die dazu konfiguriert ist, die Luft innerhalb der Kammer (204, 304) dort hindurch zu lassen, und zu verhindern, dass nicht-gasförmige Inhalte innerhalb der Kammer über das Ventil austreten.

9. Der Sous-Vide-Beutel (200, 300) gemäß einem der Ansprüche 1 bis 8, der einen entfernbaren Deckel zum Abdichten des Ventils (214, 314) aufweist.

10. Der Sous-Vide-Beutel (200, 300) gemäß einem der Ansprüche 1 bis 9, wobei ein maschinenlesbarer Code auf einer Außenoberfläche des Sous-Vide-Beutels gedruckt oder aufgebracht ist, wobei der maschinenlesbare Code zumindest Folgendes angibt:
eine Art von Inhalten in der Kammer;
eine Chargennummer der Inhalte in der Kammer;
ein Herstellungsdatum der Inhalte in der Kammer; oder
ein Haltbarkeitsdatum der Inhalte in der Kammer.

## Revendications

1. Poche sous vide (200, 300), comprenant:
un matériau plastique présentant une partie fermée hermétiquement (202, 302) s'étendant au moins partiellement autour d'un périmètre du matériau plastique et définissant une chambre (204, 304);
une cloison (210) s'étendant dans au moins une partie de la chambre formant une limite entre une première partie (212a, 312a) et une deuxième partie (212b, 312b) de la chambre, où les première et deuxième parties sont configurées, chacune, pour y recevoir un produit alimentaire;
**caractérisée par**
une soupape unidirectionnelle (214, 314) destinée à faciliter l'évacuation de l'air de la chambre; et
une formation de barrage (216, 316) configurée pour empêcher que le contenu non gazeux ne sorte de la chambre à travers la soupape pendant l'évacuation de l'air.

2. Poche sous vide (200, 300) selon la revendication 1, comprenant une partie pouvant être déchirée (201, 301) et une ouverture pouvant être à nouveau fermée hermétiquement (207, 307) de la chambre (204, 304), dans laquelle l'ouverture pouvant être à nouveau fermée hermétiquement de la chambre est accessible en déchirant la partie pouvant être déchirée.

3. Poche sous vide (200, 300) selon la revendication 2, dans laquelle la chambre contient une sauce avant le déchirement de la partie pouvant être déchirée (201, 301).

4. Poche sous vide (200, 300) selon l'une quelconque des revendications 1 à 3, dans laquelle la cloison (210) est: une soudure entre les parties de paroi opposées de la chambre; ou
un joint étanche entre les parties de paroi opposées de la chambre.

5. Poche sous vide (200, 300) selon l'une quelconque des revendications 1 à 4, dans laquelle la cloison (210) est frangible pour éliminer la limite entre les première et deuxième parties (212a, 212b, 312a, 312b).

6. Poche sous vide (200, 300) selon la revendication 1, dans laquelle au moins une partie du matériau plastique de la chambre (204, 304) est texturée pour créer des canaux permettant à l'air de circuler à travers ce dernier vers la soupape (214, 314) pendant l'évacuation de l'air.

7. Poche sous vide (200, 300) selon la revendication 6, dans laquelle au moins une partie du matériau plastique de la chambre qui est texturée comprend:
une texture en relief;
une texture gaufrée; ou
une texture crénelée.

8. Poche sous vide (200, 300) selon l'une quelconque des revendications 1 à 7, dans laquelle la soupape (214, 314) comporte une membrane configurée pour permettre que l'air dans la chambre (204, 304) passe à travers cette dernière et pour empêcher que le contenu non gazeux dans la chambre ne sorte à travers la soupape.

9. Poche sous vide (200, 300) selon l'une quelconque des revendications 1 à 8, comprenant un couvercle amovible destiné à fermer hermétiquement la soupape (214, 314).

10. Poche sous vide (200, 300) selon l'une quelconque des revendications 1 à 9, dans laquelle un code lisible par machine est imprimé ou appliqué sur une surface extérieure de la poche sous vide, dans laquelle le code lisible par machine indique au moins l'un parmi:
un type de contenu dans la chambre;
un numéro de lot du contenu dans la chambre;
une date de fabrication du contenu dans la chambre; et
une date limite d'utilisation du contenu dans la chambre.
